# EUROPEAN PATENT SPECIFICATION

(11) **EP 0 474 400 B1**
(45) Date of publication and mention of the grant of the patent: **20.12.1995**
(21) Application number: 91307709.5
(22) Date of filing: 21.08.1991
(51) Int. Cl.: F16F 7/12, B62D 1/19

(54) **Steering column equipped with an energy absorption system**
Lenksäule versehen mit einem energieabsorbierenden System
Installation de volant pourvu d'un absorbeur d'énergie

(30) Priority: 05.09.1990 GB 9019408
(43) Date of publication of application: 11.03.1992
(73) Proprietor: Rolls-Royce Motor Cars Limited, Crewe Cheshire CW1 3PL (GB)
(72) Inventor: Lewis, Michael Kenneth, Sandbach, CW11 9LU, Cheshire (GB)
(74) Representative: Downey, William Gerrard

(56) References cited:
- EP-A- 0 240 116
- EP-A- 0 335 397
- US-A- 4 117 741

## Description

The invention relates to an energy absorption system particularly, but not exclusively, for a collapsible steering column arrangement for vehicles.

Collapsible steering column arrangements are known. One such steering column arrangement with an energy absorbing element is disclosed in U.S. Patent 4,786,076. In this arrangement the energy absorbing element is a shear plate forming part of a U shaped structure attached to a steering column. A bolted connection secures both the shear plate and its supporting U shaped bracket to the vehicle frame. Therefore the force required to rupture the shear plate is very much dependent on the pre-load applied to the bolted connection and a special cup spring is fitted to the bolted connection to provide variable adjustment of this friction force. Also the steering shaft is fitted with a protective cylindrical steering member. This is fastened to the steering column so that impact loads coming on to this protective member are transmitted to the steering column. Thus side loads coming from this area are added to direct loads acting on the steering wheel making it difficult to provide a uniform rate of energy absorption for the steering column, per se.

An alternative arrangement is disclosed in US Patent 4,117,741. In this arrangement the energy absorbing member is in the form of a simply supported beam having a portion with a reduced cross section and with bolted end connection. The bolted connection is taken back to the vehicle frame so that it is difficult to distinguish between restraining loads and loads due to deformation. During impact the deflected form of the energy absorbing member takes up more space than the initial undeflected form. This can be a disadvantage in steering column assemblies where space is at a premium.

A further arrangement is described in EP-A-0335397. In this arrangement a tilting collapsible steering column comprises a tilt bracket connected to a column jacket. The tilt bracket has side wall sections and is formed with cuts near the place at which it is connected to the column jacket. Under impact conditions, the side wall sections initially deform and then shear near the cuts. The rate of energy absorption is therefore again dependent upon shear force which may be difficult to control and the shearing elongates the length required for the arrangement which as already indicated can be disadvantageous.

According to the present invention as specified in claim 1, there is provided a collapsible steering column arrangement for a vehicle such as, for example, an automobile or a motorboat the energy absorption system comprises a generally U-shaped deformable member, and a deforming member spaced, in an inoperative position, away from the deformable member, the two members being relatively movable whereby, in operation, the deforming member is caused to deform the deformable member to reduce the overall length of the deformable member in the direction of the legs of the U and absorb energy in so doing. The deformable member is connected to a fixed support for the steering column and the deforming member to the steering column itself or vice-versa. The deformable member may be of any suitable material, but mild steel is preferred. The shape and dimension of the deformable member and/or the deforming member are chosen to give desired energy absorption characteristics. The deforming member may be parallelpipedic or cylindrical. The deformable member may be profiled to have energy absorption peaks to cater for impact variations and produce a uniform energy absorption rate.

In order that the invention may be more clearly understood, one embodiment thereof will now be described, by way of example, with reference to the accompanying drawings, in which:-
Figure 1a shows a diagrammatic perspective view of an energy absorbing system prior to deformation.
Figure 1b shows a view of the system similar to Figure 1a but after deformation,
Figure 1c shows a view similar to Figure 1b but of an alternative system.
Figure 2a shows a perspective view of an alternative deformable member to those shown in Figures 1a, 1b and 1c,
Figure 2b shows a perspective view of another form of deformable member.
Figure 3 is a diagrammatic part sectional view of a steering column arrangement for a vehicle incorporating an energy absorbing system of the type shown in Figure 1a, 1b, 1c, 2a and 2b.
Figure 4 is a diagrammatic exploded perspective view,
Figure 5 is a side elevational view in the direction of arrow B of part of the arrangement of Figure 4,
Figure 5a is a profiled fin member,
Figure 6 is a cross-sectional view taken along the line 6-6 of Figure 3,
Figure 7 shows a side elevational view of an alternative steering column arrangment to that of Figure 3,
Figure 8 is a sectional plan view of the arrangement of Figure 7, taken along the line a-a of Figure 7, and
Figure 9 is a sectional end elevational view of the arrangement of Figure 7 taken along the line b-b of Figure 7.

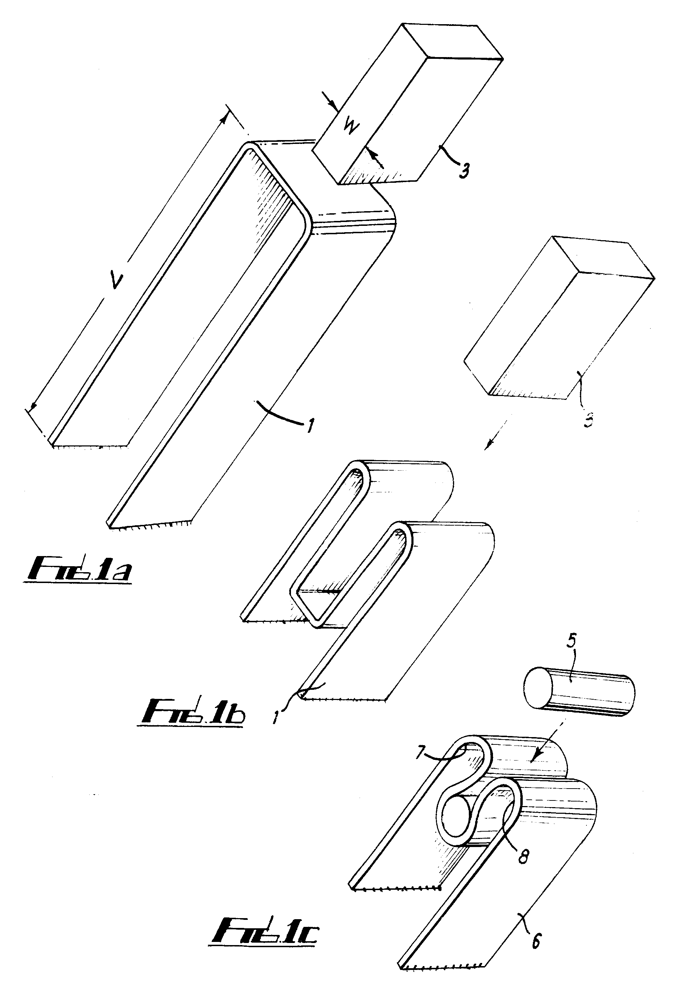

Referring initially to Figures 1a and 1b of the drawings, the basic principle behind the invention will first be described, Figure 1a shows a perspective view of an elongate U-shaped energy absorbing deformable member 1 and spaced from this member 1, a parallelepipedic deforming member 3. In a vehicle steering column arrangement member 1 is connected to the vehicle support and member 3 to the steering column or vice-versa as will be described in more detail later. Figure 1a shows the normal non-operative position of the system, that is with member 1 undeformed. Figure 1b shows the system of Figure 1a after the vehicle steering column arrangement has been involved in an impact of sufficient force to activate the system such as would be produced if the vehicle were involved in an accident. In such an impact, deforming member 3 impacts upon deformable member 1 deforming the member 1 so as to produce a subsidiary U-shape by deformation of the base of the original U thereby reducing the effective length of the member 1.It is in this deformation that the energy of the driver, moving forward with a significant velocity differential compared to the vehicle, as would occur in an accident, is absorbed in a controlled manner. This in turn reduces the risk of injury to the driver. The initially deforming load required may be varied by varying the width W (see Figure 1a). The greater the dimension W the greater will be the load required initially to deform member 1.

Figure 1c shows a modification of the arrangment of Figures 1a and 1b in which the deforming member 5 is cylindrical and acts on a U-shaped deformable member 6. The choice of diameter of the cylindrical deforming member 5 influences to a large extent the form of the curves indicated at 7 and 8 which in turn influences the initial load required to deform member 6. Smaller curves will require greater energy to deform than larger curves.

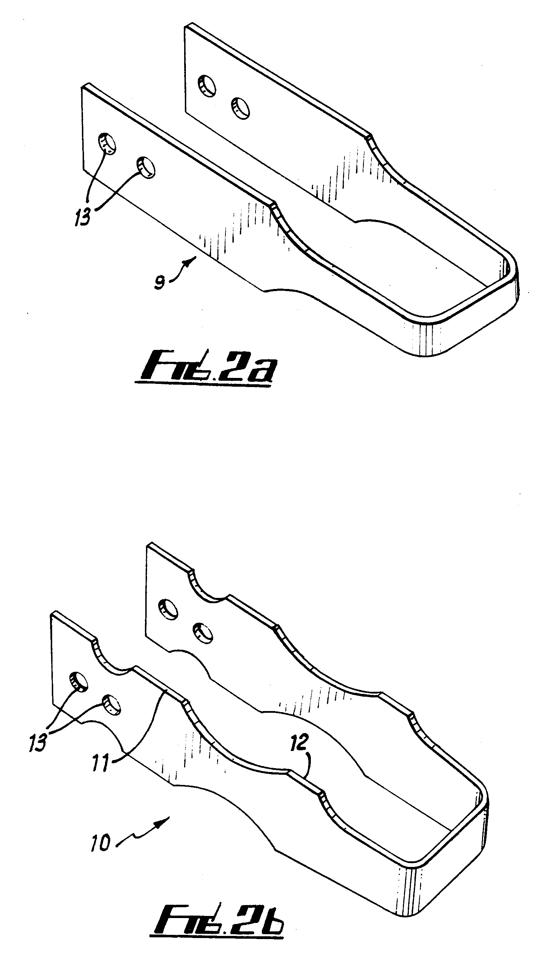

The load absorption rate can be predetermined in other ways. Apart from changing the material of the deformable member the deformable member can be shaped to influence the load absorption rate. Figure 2a, for example, shows a deformable member 9 with a change of section whereby the load absorption rate changes as the deformable member is bent back upon itself. Figure 2b shows a deformable member 10 having a more complex profile with peaks at 11 and 12 to provide a nett uniform load absorption rate as will be later explained. Holes 13 are to facilitate the pinning of the deformable member to its support member. A main advantage of the deformable member in the system according to the invention is that if the deformable member starts with a length L as shown in Figure 1a, then, as it is rolled back upon itself under the impact load condition dimension L becomes shorter as shown in Figure 1b. This is important in steering column assemblies when space is at a premium. Moreover it will be appreciated that the material of the deformable member is first formed into a curved shape and then stretched straight again and is rolled back upon itself twice and therefore the work rate is increased leading to greater energy absorption for the same amount of material. It will also be appreciated that the deforming member acts to guide the material of the deformable member as it is moved as well as causing deformation.

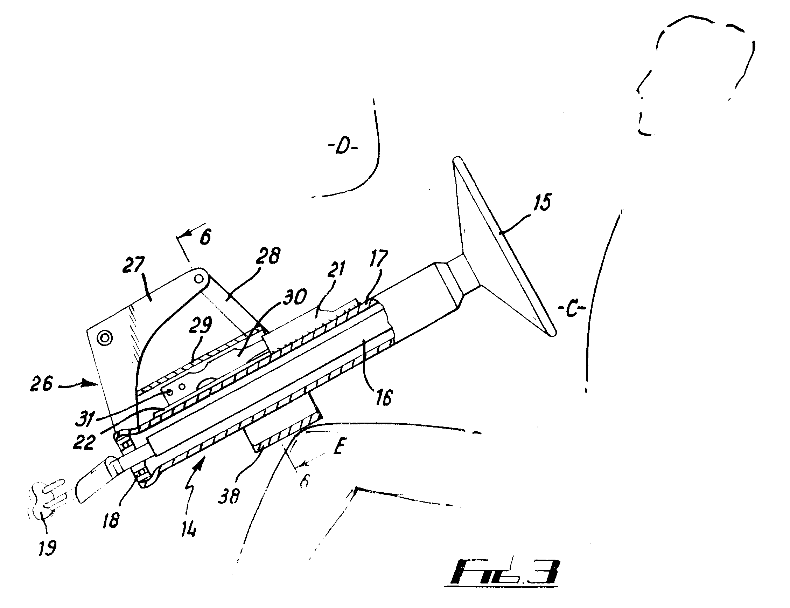

Figures 3 to 6 show an energy absorption system of the above described type implemented in a vehicle steering column assembly.

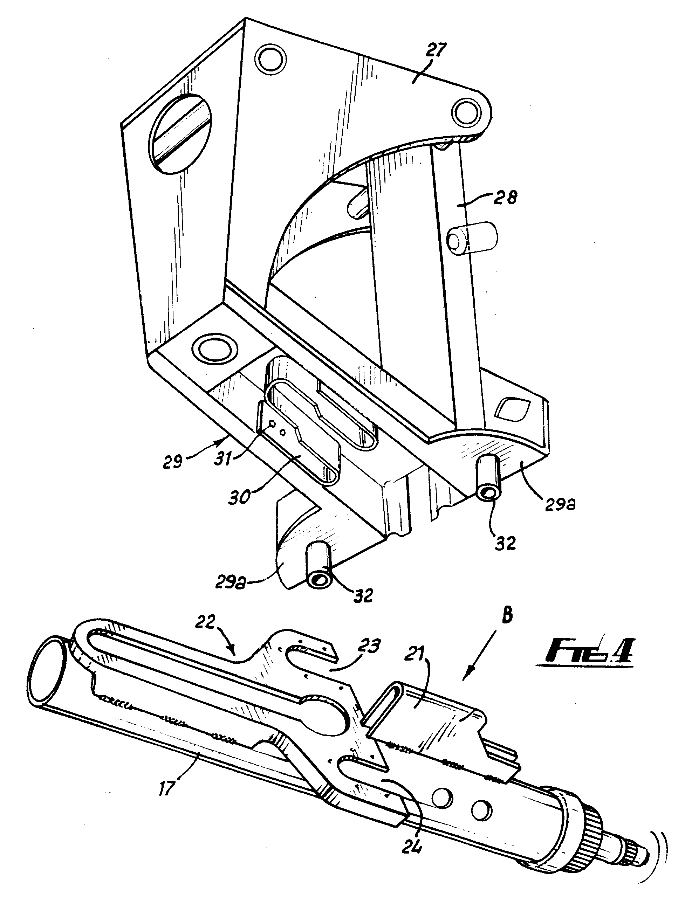

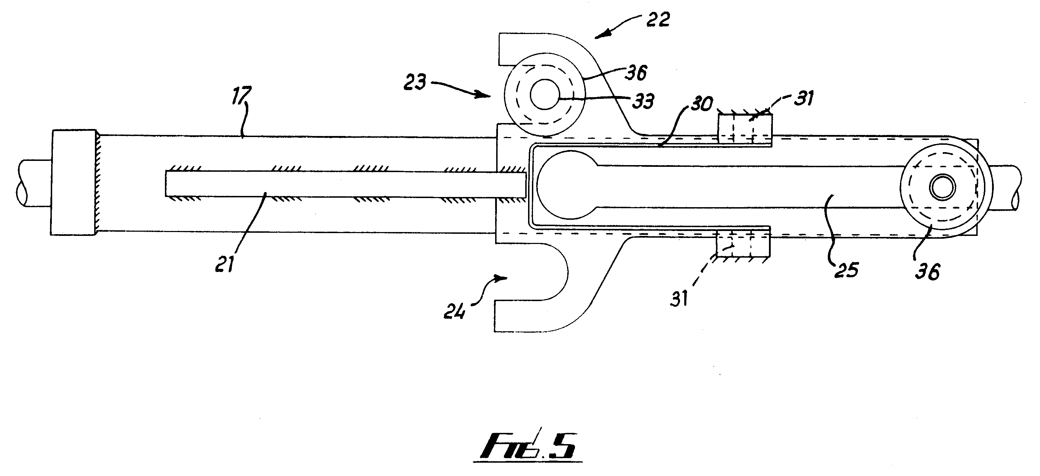

The vehicle steering apparatus comprises a steering column assembly 14 including a steering wheel 15, connected to steering shaft 16 fitted within a steering tubular housing column 17 by means of the usual bearings 18 at top (not shown) and bottom. Steering shaft 16 connects to a coupling 19. A deforming member in the form of a guide fin 21 is rigidly attached to steering housing 17 as by welding. As shown in Figure 5a, the fin 21 can be profiled to provide variation in load characteristics.

A T shaped support plate 22, best shown in Figure 4 and Figure 5 is also attached to steering tube housing 17 as by welding. Support plate 22 is slotted at the head of the T at 23 and 24 and has a longitudinal slot 25 along the tail of the T for a purpose later to be explained.

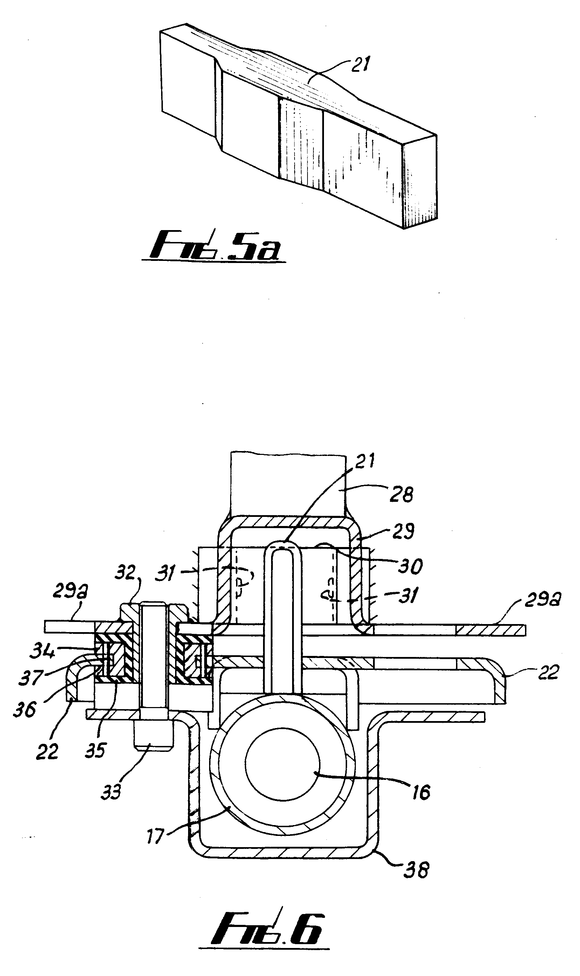

Steering column assembly 14 co-operates with a support assembly shown generally at 26. Support assembly 26 comprises an L-shaped main bracket 27, brace member 28 and a generally inverted U shaped main member 29 connecting between bracket 27 and brace member 28. As best seen in Figure 6, U shaped member 29 forms a housing for a deformable member 30 shown pinned to housing member 29 at 31.

Deformable member 30 can take any of the forms described with reference to Figures 1a, b and c and 2a and 2b. The support assembly 26 is attached to the frame of the vehicle in any suitable manner.

The steering column assembly 14 and support assembly 26 are mounted for movement relative to each other in a manner best seen in Figures 4 and 6. As seen in Figure 6 the main U-shaped member 29 has attached thereto at end portions 29a, hollow internally screwed mounting elements 32. A screwed fastener element 33 co-operates with mounting element 32 and carries a U-shaped bracket member 38 (see also Figure 3) whereby U-shaped member 38 is attached to main member 29 and thereby attached to the vehicle frame. Thus any load coming onto the bracket 38 is transferred directly to the vehicle frame.

An isolator disc 34 carrying a rubber vibration insulator insert 35 is located on mounting element 32 and serves to isolate the steering column assembly 14 from vibrations coming from the vehicle through support assembly 26. Isolator disc 34 is slotted at 36 to co-operate with slots 23, 24 and also longitudinal slot 25 on plate 22. By means of this fastening arrangement steering column assembly 14 and support assembly 26 can be fastened together at a predetermined preload which is independent of the impact loading causing deformation of deformable energy absorbing member 30. Deformable energy absorbing member 30 is shown in the undeformed state in Figure 5 and in the deformed state in Figure 4. Shear pins 37 connect the isolator disc 34 to the plate 22. Thus before relative motion can take place between the deforming member 20 and the deformable member 30 the preload of fastening elements 33 must be overcome and pins 37 must be sheared. Prior to such relative motion, the deforming member 21 is positioned so as not to interfere with the function of the isolator mounting.

In operation the impact loading due to an accident will overcome the pre-loading of the fastening elements 32 and 33, pins 37 will be sheared thus freeing the deforming member 21 to move against deformable member 30 which becomes deformed as discussed with referenee to Figures 1a, 1b, 1c, 2a and 2b. In practice energy is absorbed for direct loads coming from impacts in the chest area C (see Figure 3) and for additional indirect loading produced from impacts with fascia and instrument controls at area D. In accordance with the invention a uniform rate of energy absorption can be provided despite these additional loads by suitably designing the deformable member 30, for example deformable member 30 is designed to have the peaks 11, 12 shown in Figure 2b. A further factor which makes it difficult to achieve a uniform load absorption rate is that loads coming from the knee area E conventionally impact the steering column assembly, per se. In accordance with the present invention impacts from the knee area are taken on U-shaped member 38, see Figure 3 and Figure 6, and as previously described member 38 is tied to the frame of the vehicle. Thus in this arrangement the steering column assembly is free from loads coming from knee impacts. U-shaped member 38 conveniently can be an energy absorbing member as described with reference to Figure 1a, 1b and 1c. It could by expedient design absorb energy from the lower torso although it does not do so in this embodiment.

Preferred material for the U-shaped deformable member is mild steel.

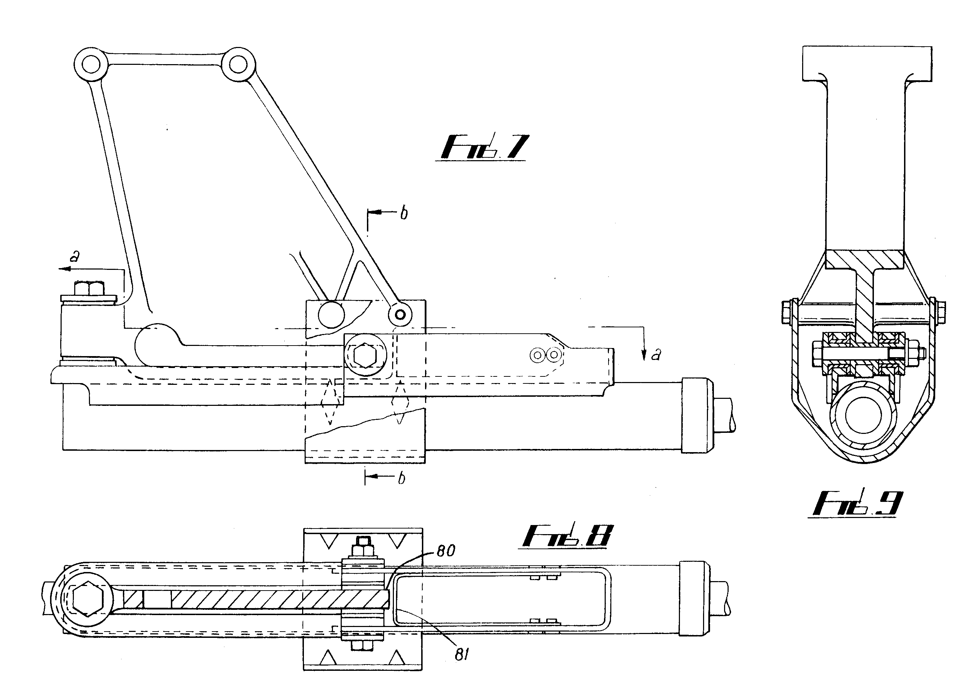

Figures 7, 8 and 9 diagrammatically show an alternative to the embodiment illustrated in Figures 3 to 6. In this alternative the U-shaped deformable member 81 is mounted on the column and the deforming member 80 on the column support, that is opposite to the arrangement of Figures 3 to 6 where the deforming member 21 is mounted on the column and the deformable member 30 on the column support. In all other respects, the alternative is the same as the Figures 3 to 6 embodiment.

It will be appreciated that the above embodiment has been described by way of example only and that many variations are possible without departing from the scope of the invention as defined in the accompanying claims.

## Claims

1. A collapsible steering column arrangement for a vehicle comprising a steering column assembly (14) and a support assembly (26) fastened together but mounted for movement relative to each other when subject to a predetermined load and an energy absorption system characterised in that the system comprises a generally U-shaped deformable member (1,6,9,10,30 or 81) which is connected to one of the steering column assembly (14) and the support assembly (26) through the free ends of its legs and a deforming member (1,6,10,30 or 81) connected to the other of the steering column assembly (14) and the support assembly (26) whereby when in operation, the support assembly and steering column assembly are subject to the predetermined load the assemblies move relative to each other and the deforming member is caused to deform the deformable member to produce a substantially M-shaped member and to absorb energy in so doing.

2. A collapsible steering column arrangement as claimed in claim 1, in which the deformable member (1,6,9,10 or 30) is made of mild steel.

3. A collapsible steering column arrangement as claimed in claim 1, in which the shape and dimensions of the deformable member (1,6,9,10 or 30) are chosen to give desired energy absorption characteristics.

4. A collapsible steering column arrangement as claimed in claim 1, in which the shape and dimensions of the deforming member (3, 4 or 21) are chosen to give desired energy absorption characteristics.

5. A collapsible steering column arrangement as claimed in claim 1, in which the deformable member (3) is parallelepipedic in shape.

6. A collapsible steering column arrangement as claimed in claim 1, in which the deforming member (5) is cylindrical in shape.

7. A collapsible steering column arrangement as claimed in claim 1, in which the deformable member (10) is profiled to have energy absorption peaks to cater for impact variations and produce a uniform energy absorption rate.

## Patentansprüche

1. Knickbare Lenk- bzw. Steuersäulenanordnung für ein Fahrzeug, welche ein Lenk- bzw. Steuersäulenaggregat (14) und ein Halterungsaggregat (26), die miteinander verbunden jedoch so angeordnet sind, daß sie relativ zueinander beweglich sind, wenn sie einer vorgegebenen Belastung ausgesetzt werden, sowie ein Energieabsorptionssystem aufweist, dadurch **gekennzeichnet,** daß das System ein insgesamt U-förmiges, verform- bzw. deformierbares Teil oder Glied (1,6,9,10, 30 oder 81), das über die freien Enden seiner Schenkel mit einem der beiden Aggregate Lenk- bzw. Steuersäulenaggregat (14) oder Halterungsaggregat (26) verbunden ist, sowie ein verformendes Teil bzw. Glied (1,6, 10,30 oder 81) aufweist, das mit dem jeweils anderen der beiden Aggregate Steuersäulenaggregat (14) und Halterungsaggregat (26) verbunden ist, derart daß wenn im Betriebszustand das Halterungsaggregat und das Lenk- bzw. Steuersäulenaggregat der vorgegebenen Belastung ausgesetzt werden, die Aggregate sich relativ zueinander bewegen und das verformende bzw. deformierende Teil bzw. Glied eine Verformung des verform- bzw. deformierbaren Teils bzw. Gliedes bewirkt, wodurch ein im wesentlichen M-förmiges Glied erzeugt wird und hierbei Energie absorbiert wird.

2. Knickbare Lenk- bzw. Steuersäulenanordnung nach Anspruch 1, dadurch **gekennzeichnet,** daß das verform- bzw. deformierbare Teil bzw. Glied (1,6,9,10 oder 30) aus Flußstahl besteht.

3. Knickbare Lenk- bzw. Steuersäulenanordnung nach Anspruch 1, dadurch **gekennzeichnet,** daß die Form und die Abmessungen des verform- bzw. deformierbaren Teils (1,6,9,10 oder 30) zur Erzielung gewünschter Energieabsorptionscharakteristiken gewählt sind.

4. Knickbare Lenk- bzw. Steuersäulenanordnung nach Anspruch 1, dadurch **gekennzeichnet,** daß die Form und die Abmessungen des verformenden Teils bzw. Glieds (3,4 oder 21) zur Erzielung gewünschter Energieabsorptionscharakteristiken gewählt sind.

5. Knickbare Lenk- bzw. Steuersäulenanordnung nach Anspruch 1, dadurch **gekennzeichnet,** daß das verform- bzw. deformierbare Teil bzw. Glied (3) parallelepipedische Form besitzt.

6. Knickbare Lenk- bzw. Steuersäulenanordnung nach Anspruch 1, dadurch **gekennzeichnet,** daß das verformende Teil bzw. Glied (5) zylindrische Form besitzt.

7. Knickbare Lenk- bzw. Steuersäulenanordnung nach Anspruch 1, dadurch **gekennzeichnet,** daß das verform- bzw. deformierbare Teil bzw. Glied (10) so profiliert ist, daß es Energieabsorptionsmaxima zur Anpassung an Stoßschwankungen und zur Erzeugung einer gleichförmigen Energieabsorptionsrate aufweist.

## Revendications

1. Assemblage de colonne de direction pouvant s'affaisser pour véhicule, comprenant un ensemble de colonne de direction (14) et un ensemble support (26), fixés ensemble mais montés pour un déplacement relatif entre eux en cas de soumission à une charge prédéterminée, et un système d'absorbtion d'énergic, caractérisé par le fait que le système comporte un élément déformable globalement en forme de U (1, 6, 9, 10, 30 ou 81) qui est connecté à l'un des ensembles de colonne de direction (14) et de support (26), par les extrémités libres de ses pattes et un élément de déformation (3, 5, 20, 21, ou 80) connecté à l'autre des ensembles de colonne de direction (14) et de support (26), grâce à quoi, lorsque, en fonctionnement, l'ensemble support et l'ensemble de colonne de direction sont soumis à la charge prédéterminée, les ensembles se déplacement l'un par rapport à l'autre et l'élément de déformation est conduit à déformer l'élément déformable pour produire un élément sensiblement en forme de M et ainsi absorber de l'énergie.

2. Assemblage de colonne de direction pouvant s'affaisser selon la revendication 1, dans lequel l'élément déformable (1, 6, 9, 10 ou 30) est en acier doux.

3. Assemblage de colonne de direction pouvant s'affaisser selon la revendication 1, dans lequel la forme et les dimensions de l'élément déformable (1, 6, 9, 10 ou 30) sont choisies pour donner une caractéristique voulue d'absorption d'énergie.

4. Assemblage de colonne de direction pouvant s'affaisser selon la revendication 1, dans lequel la forme et les dimensions de l'élément de déformation (3, 4 ou 21) sont choisies pour donner une caractéristique voulue d'absorption d'énergie.

5. Assemblage de colonne de direction pouvant s'affaisser selon la revendication 1, dans lequel l'élément déformable (3) est de forme parallélépipédique.

6. Assemblage de colonne de direction pouvant s'affaisser selon la revendication 1, dans lequel l'élément de déformation (5) est de forme cylindrique.

7. Assemblage de colonne de direction pouvant s'affaisser selon la revendication 1, dans lequel l'élément déformable (10) est profilé pour avoir des crêtes d'absorption d'énergie afin de traiter les variations d'impact et produire un taux uniforme d'absorption d'énergie.
